# EUROPÄISCHE PATENTSCHRIFT

(11) **EP 3 155 407 B1**
(45) Veröffentlichungstag und Bekanntmachung des Hinweises auf die Patenterteilung: **23.09.2020**
(21) Anmeldenummer: 15747088.1
(22) Anmeldetag: 29.05.2015
(51) Int. Cl.: G01N 21/89, G01N 21/896

(54) **VORRICHTUNG UND VERFAHREN ZUR MESSUNG VON VERZERRUNGSFEHLEM IN EINEM PRODUZIERTEN FLOATGLAS-BAND**
DEVICE AND METHOD FOR MEASURING DISTORTION DEFECTS IN A MANUFACTURED FLOAT GLASS STRIP
DISPOSITIF ET PROCÉDÉ POUR MESURER DES ERREURS DE DISTORSION DANS UNE BANDE DE VERRE FLOTTÉ PRODUITE

(30) Priorität: 10.06.2014 DE 102014008596
(43) Veröffentlichungstag der Anmeldung: 19.04.2017
(73) Patentinhaber: Grenzebach Maschinenbau GmbH, 86663 Asbach-Baeumenheim (DE)
(72) Erfinder: SCHWAB, Leonhard, 80689 München (DE)
(74) Vertreter: Kindermann, Peter
(86) Internationale Anmeldenummer: PCT/DE2015/000269
(87) Internationale Veröffentlichungsnummer: WO 2015/188802

(56) Entgegenhaltungen:
- EP-A1- 0 576 011
- EP-A1- 2 253 948
- DE-A1-102008 019 084
- DE-A1-102011 109 793
- FR-A1- 2 983 583

## Beschreibung

Die Erfindung bezieht sich auf eine Vorrichtung und ein Verfahren zur schnellen und sicheren Messung von Verzerrungsfehlern in einem produzierten Floatglas - Band. Es ist hierbei eine ganzflächige Messung der Dicken - und der Brechkraft - Variation möglich.

Zum Stand der Technik sind aus der Patentschrift EP 1 288 651 B1 ein Verfahren und eine Vorrichtung zur Ermittlung von optischen Fehlern bekannt.
Der Oberbegriff des Patentanspruchs 1 geht hierbei aus von einer Vorrichtung zur Ermittlung von optischen Fehlern, insbesondere der Brechkraft, in großflächigen Scheiben aus einem transparenten Werkstoff wie Glas mittels einer Auswertung des beobachteten Bildes, umfassend die folgenden Merkmale:
Eine Lichtquelle zum Projizieren eines definierten Musters aus regelmäßigen Sequenzen, wobei die Sequenzen wenigstens zwei unterschiedliche Lichtintensitäten umfassen; Mittel zum Anordnen der Scheibe in den Strahlengang der Projektion, und als weiteres Merkmal, eine Kamera, wobei Sequenzen des Musters auf Pixel der Kamera gerichtet sind.
Dieser Patentschrift liegt unter anderem die Zielsetzung zugrunde, eine Vorrichtung nach dem Oberbegriff des Patentanspruchs 1 anzugeben, mit der optische Fehler in wenigstens einer Dimension einer Scheibe ermittelbar sind.
Hierzu ist, nach den Angaben im Kennzeichen des Patentanspruchs 1, unter Schutz gestellt worden, dass die Lichtquelle eine als Leuchtmatrix ausgebildete Leuchtwand aus einer Vielzahl von selektiv, vorzugsweise zeilen- und/oder spaltenweise ansteuerbaren LEDs ist.

Zum Stand der Technik ist weiter aus der, auf die Anmelderin eingetragenen, DE 10 2010 046 433 B4 eine Vorrichtung und ein Verfahren zum Detektieren von Fehlstellen in kontinuierlich erzeugtem Float - Glas bekannt. Dieser Druckschrift liegt die Zielsetzung zugrunde, eine Vorrichtung und ein Verfahren vorzustellen mit dem während des laufenden Prozesses der Erzeugung eines Bandes aus flüssigem Glas, einem so genannten Float - Glas, die Bildung von Fehlstellen, zum Beispiel in der Form von Einschlüssen, Blasen oder ähnlichen unerwünschten Erscheinungen, ständig zu detektieren und zu überwachen.
Zur Erreichung dieser Zielsetzung ist, nach den Angaben im Patentanspruch 1 dieser Druckschrift, unter Schutz gestellt worden, dass eine Vorrichtung zum Detektieren von Fehlstellen in einem kontinuierlich erzeugten Float - Glasband mittels der Prüfung eines quer zur Förderrichtung verlaufenden, im Durchlicht beobachteten Glas - Streifens dadurch gekennzeichnet ist, dass sie die folgenden Merkmale aufweist:
a) eine modulartig aufgebaute Befestigungsbrücke für Scansensoren die entsprechend der Breite des zu prüfenden Float - Glasbandes ausgelegt ist, wobei die Scansensoren hinsichtlich ihres Erfassungsbereiches diese Breite lückenlos abdecken und das Float - Glasband mittels eines linienförmigen Leuchtmittels mit konstantem Lichtstrom und eines angrenzenden linienförmigen Leuchtmittels mit oszillierendem Lichtstrom lückenlos durchleuchtet wird,
b) eine jedem Scansensor zugeordnete Justiereinrichtung die eine Veränderung der Lage jedes Scansensors entlang der 3 Raumkoordinaten in positiver und negativer Richtung ermöglicht,
c) eine jedem Scansensor zugeordnete einschwenkbare Target - Einrichtung in der Form einer künstlichen Messebene zur genauen Ausrichtung eines Scansensors auf die Oberfläche des Float - Glasbandes,
d) eine Kühleinrichtung zur Kühlung der Leuchtmittel

Des Weiteren ist aus dem Stand der Technik die Druckschrift WO 2013/020542 A1 bekannt, die ebenfalls auf die Anmelderin zurückgeht, und die ein Verfahren und eine Vorrichtung zur sicheren Detektion von Materialfehlern in transparentem Werkstoff beschreibt. Dieser Druckschrift liegt die Zielsetzung zugrunde, eine Vorrichtung und ein Verfahren vorzustellen mit dem alle möglichen Fehler die in transparentem Werkstoff, insbesondere Glas, auftreten können, sicher detektieren und typisieren zu können. Zudem soll für den Anwender jederzeit erkennbar sein, dass die Sicherheit des Betriebs der Vorrichtung, bzw. des Verfahrens, gewährleistet ist.
Das Erreichen dieser Zielsetzung wird gemäß den Angaben im Patentanspruch 1, erreicht, mit einer Vorrichtung zur sicheren Detektion von Materialfehlern in einem kontinuierlich erzeugten Band aus transparentem Werkstoff mittels der Prüfung eines quer zur Förderrichtung verlaufenden, im Durchlicht und Auflicht beobachteten, Streifens eines Bandes aus diesem Werkstoff, die durch die folgenden Merkmale gekennzeichnet ist:
a) ein Befestigungs - Portal in der Breite des zu prüfenden transparenten Werkstoffs dient als Träger von Zeilenkameras, wobei die Zeilenkameras hinsichtlich ihres Erfassungsbereiches diese Breite lückenlos abdecken und das Werkstoff - Band mittels eines linienförmigen Leuchtmittels mit konstantem Lichtstrom und eines angrenzenden linienförmigen Leuchtmittels mit oszillierendem Lichtstrom lückenlos durchleuchtet wird, und wobei eine zusätzliche Hellfeld - Beleuchtung den durchsuchten Streifen im Auflicht beleuchtet,
b) das Befestigungs - Portal dient zusätzlich als Träger von weiteren Zeilenkameras, deren optische Achsen zu der der Zeilenkameras leicht geneigt sind, wobei auch die Zeilenkameras hinsichtlich ihres Erfassungsbereiches die genannte Breite lückenlos abdecken, wobei die Zeilenkameras ein Strichgitter beobachten, das sich an der Oberfläche des Leuchtmittels befindet und wobei der untersuchte Streifen mit einer Dunkelfeld - Beleuchtung im Auflicht beleuchtet wird,
c) eine Vorrichtung zur Überwachung der Funktion der Leuchtmittel und der Kameras. Weitere Vorrichtungen zur Inspektion von produziertem Glas werden durch die Offenlegungsschrift DE102008019084 A1 sowie die EP576011 A1 und die DE102011109793 A1 bekannt.

Der vorliegenden Erfindung und dem zugehörigen Verfahren liegt die Aufgabe zugrunde, eine Vorrichtung und ein Verfahren zur verbesserten Detektion und Klassifizierung von Materialfehlern in einem bewegten transparentem Medium vorzustellen.
Diese Aufgabe wird mit einer Vorrichtung nach Patentanspruch 1 und ein Verfahren nach Patentanspruch 2. Weitere bevorzugte Ausführungen werden in den Unteransprüchen definiert. Die Erfindung wird im Folgenden näher beschrieben.
Es zeigen dabei im Einzelnen:
Fig.1: eine Darstellung der Vorrichtung nach der Erfindung
Fig.2:eine Übersicht über relevante Glasfehler
Fig.3: das Prinzip der Lichtmischung und Fokussierung
Fig.4: die Verwendung verschiedener Wellenlängen als Messprinzip
Fig.5: die Verwendung einer trichroitischen Blende
Fig.6: eine Signal - Auswertung bezüglich der Lage von Blasen im Glasband

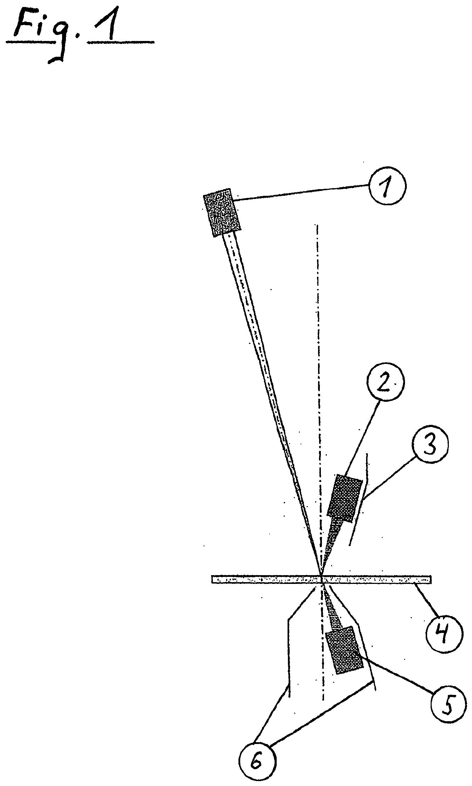

Die Fig.1 zeigt eine Darstellung der Vorrichtung nach der Erfindung.
Mit 4 ist hierbei das zu untersuchende Glasband oder die jeweilige Glasscheibe bezeichnet. Die CCD - Kamera 1 steht in dieser Darstellung für eine von vier oder mehreren nebeneinander angeordneten CCD - Kameras die zusammen, in einer bestimmten Höhe über dem Glasband angeordnet, die gesamte Breite des zu untersuchenden Glasbandes optisch erfassen. Eine Lichtquelle 2 beleuchtet das Glasband von oben in einer gestrichelt dargestellten Untersuchungsebene. Mit 5 ist eine zeilenförmige LED - Unterflur - Lichtquelle, bestehend aus einer Vielzahl von nebeneinander angeordneten LEDs, gekennzeichnet. Ein oberer Lichtquellen - Schutz 3 und ein zweiteiliger unterer Lichtquellen - Schutz 6 sorgen für den Schutz der ausfallsicheren LEDs. Die gezeigte Anlage ist auch deshalb sehr störsicher und langlebig.

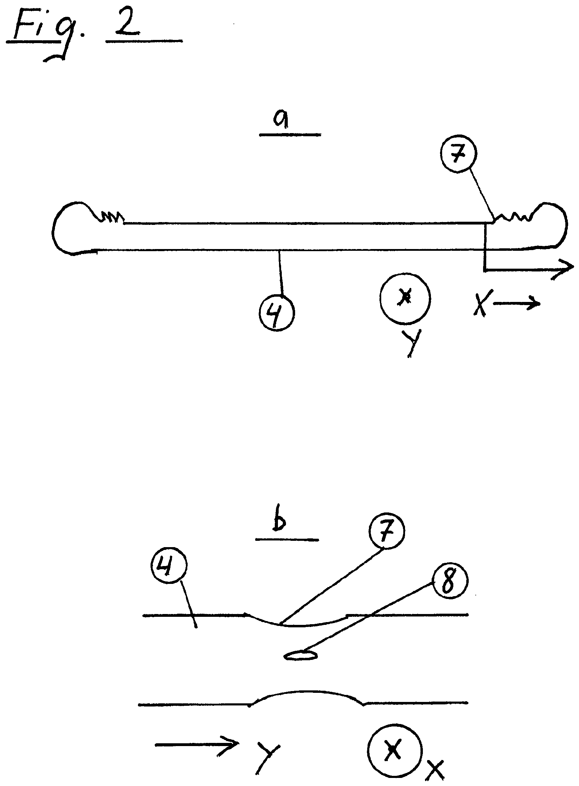

Die Fig.2 zeigt eine Übersicht über relevante Glasfehler. In der Fig.2a) ist ein, frisch aus der Schmelze des Brennofens auslaufendes Glasband nach der Kühlstrecke im Schnitt gezeigt. Mit 4 ist hierbei in der Mitte der nutzbare Bereich des Glasbandes dargestellt, während links und rechts die beiden Randbereiche, durch den Produktionsprozess verursacht, Aufwölbungen und Stauungen aufweisen die verzerrte Bereiche 7 darstellen, deshalb wirtschaftlich nicht nutzbar sind und später abgetrennt werden. Die Laufrichtung des Glasbandes ist hier mit Y bezeichnet und die, im rechten Winkel quer zur Laufrichtung verlaufende, Richtung mit X.
In der Fig.2b) ist ein im nutzbaren Bereich des Glasbands 4 detektierter Einschluss 8 gezeigt, der an der Oberfläche des Glasbands 4 auf einer oder beiden Seiten einen, überhöht dargestellt, verzerrten Bereich 7 (Verflachung oder Verdickung) des Glasbands 4 darstellt. Die Laufrichtung Y des Glasbands ist hier in der Querrichtung zur Bildebene angenommen.

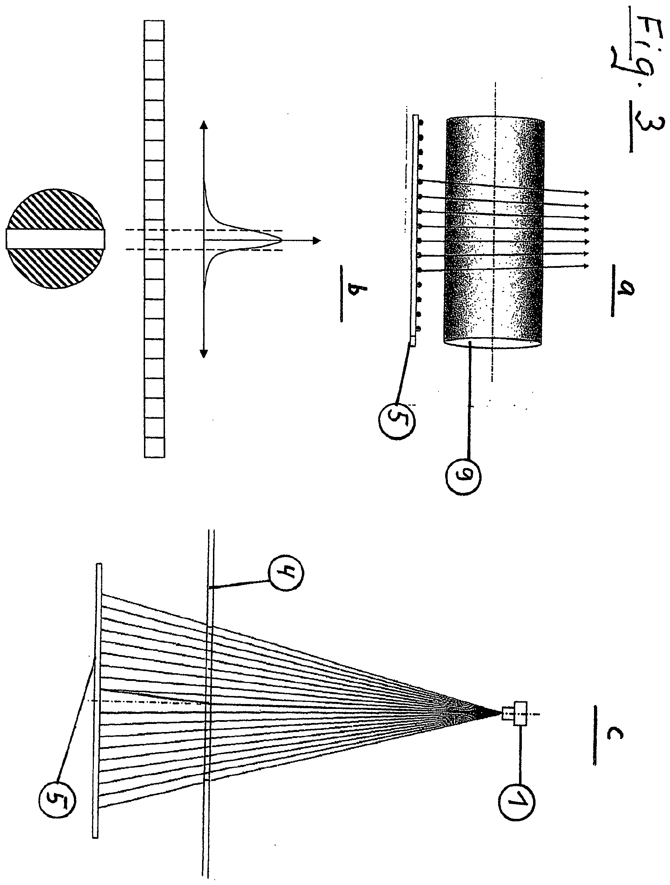

Die Fig.3 zeigt das Prinzip der Lichtmischung und Fokussierung.
In der Fig. 3a) ist ein Ausschnitt aus einer linienförmigen LED - Unterflur - Lichtquelle 5 gezeigt, bei der von einigen LEDs austretende Lichtstrahlen zu sehen sind die durch eine Zylinder - Linse 9 hindurchtreten, danach das zu untersuchende Glasband durchlaufen und zuletzt in einer CCD - Kamera 1 registriert werden. Von der Zylinder - Linse 9 ist hier ebenfalls ein Ausschnitt dargestellt. Die LED - Lichtquelle 5 und die Struktur der gezeigten Zylinder - Linse 9 erstrecken sich dabei über die gesamte Breite des zu untersuchenden Glasbands 4.
In der Fig.3c) ist dieser Sachverhalt im Prinzip ohne den Strahlengang durch die Zylinder - Linse 9 dargestellt.
Das gezeigte Prinzip der LED - Kollimation mittels der Zylinder - Linse 9 ermöglicht große Abstände der LED - Beleuchtung ohne wesentliche Verluste an Intensität und eine hohe Empfindlichkeit bezüglich zu erfassender Verzerrungsfehler. Der Strahlengang zwischen der, im Wesentlichen punktförmigen, Lichtquelle wie sie eine LED darstellt, und der Aufnahme - Ebene einer CCD - Kamera 1 lässt sich dabei mittels einer Veränderung des Abstandes zwischen der LED - Lichtquelle 5 und der Zylinder - Linse 9 fast beliebig anpassen.
In der Fig. 3b) ist die Verteilung der Strahlintensität einer LED, die in einer CCD-Kamera registriert wird, dargestellt. Die Position des Peaks auf der CCD - Zeile hängt von der Glasdicke, bzw. von dem Dicken - oder Brechkraftgradienten in X - Richtung des Glases ab. Durch genaue Messung der Positions - Verschiebung im Vergleich zu fehlerfreiem Glas ergibt sich die lokale Verzerrung des Glases in X - Richtung.
Eine CCD - Kamera 1 hat als kleinste Auflösung die Möglichkeit der Registrierung von zu detektierenden Fehlern im Glasband die Breite eines Pixels zur Verfügung. Die Breite eines Pixels beträgt etwa 10 µm. Da die Fläche der in der Fig.3b dargestellten Verteilungs - Kurve , die in etwa einer so genannten Gauß - Verteilung entspricht, größer ist als ein Pixel, ist es zur Erreichung einer hohen Empfindlichkeit des erfindungsgemäßen Mess - Systems notwendig, die Lage des so genannten Schwerpunkts dieser Verteilung zu ermitteln. Dies wird mittels eines speziellen mathematischen Algorithmus erreicht. Damit kann die Lage des Schwerpunkts auf der CCD - Zeile mit einer Sub - Pixel - Genauigkeit, zum Beispiel von 0,1 Pixel (1µm) bestimmt werden.

Die lokale Verzerrung kann mit der Anordnung an vielen Punkten zum Beispiel im Abstand von Delta -x gemessen werden. Alle lokalen Verzerrungen zusammengenommen ergeben ein komplettes Querprofil der Variation in X - Richtung. Aufgrund der vollflächigen Messung durch aufeinanderfolgende Querprofile und der Stetigkeit der Glasoberfläche kann aus der Variation in X - Richtung auch die Variation in Y - Richtung berechnet werden

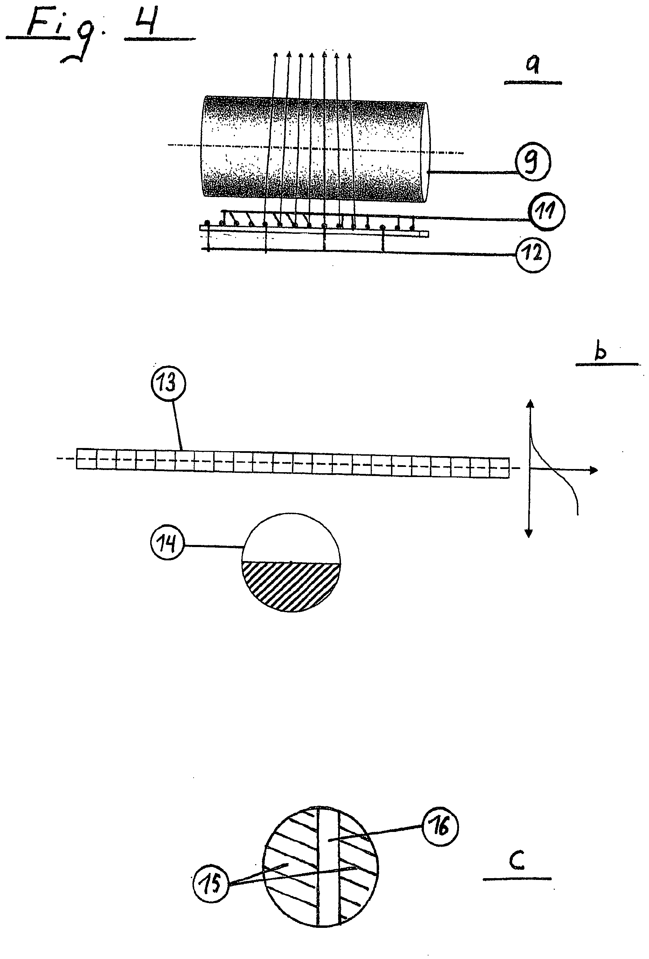

Die Fig.4 zeigt die Verwendung verschiedener Wellenlängen als Messprinzip.
In der Fig.4a) ist ein vergleichbares Bild wie in der Fig.3a) zu sehen, jedoch mit dem Unterschied, dass anstelle einer linienförmigen Anreihung einer bestimmten Art von LEDs, deren zwei hinsichtlich der emittierten Wellenlänge unterschiedliche als LED - Lichtquelle 5 gezeigt sind. Hierbei sind mit dem Bezugszeichen 11 grüne LEDs gekennzeichnet, während blaue LEDs mit 12 bezeichnet sind. Wesentlich hierbei ist die Tatsache, dass LEDs mit unterschiedlichen Wellenlängen verwendet werden. Es wurden hier lediglich beispielhaft LEDs mit grüner Färbung und LEDs mit blauer Färbung verwendet. Dies ermöglicht die Einrichtung von zwei oder mehr, aber verschieden und getrennt, gleichzeitig zu betreibenden Messkanälen.

In Fig.4b) ist die Intensitätsverteilung quer zur CCD - Zeile dargestellt, wie sie sich durch Verwendung einer geeigneten Messerblende ergibt.
Bei dieser Kombination mehrerer unterschiedlicher LEDs in einer Beleuchtung werden zum Beispiel Blau und Grün unabhängig von verschiedenen Zeilen mit jeweils angepasster Apertur und Verstärkung registriert.

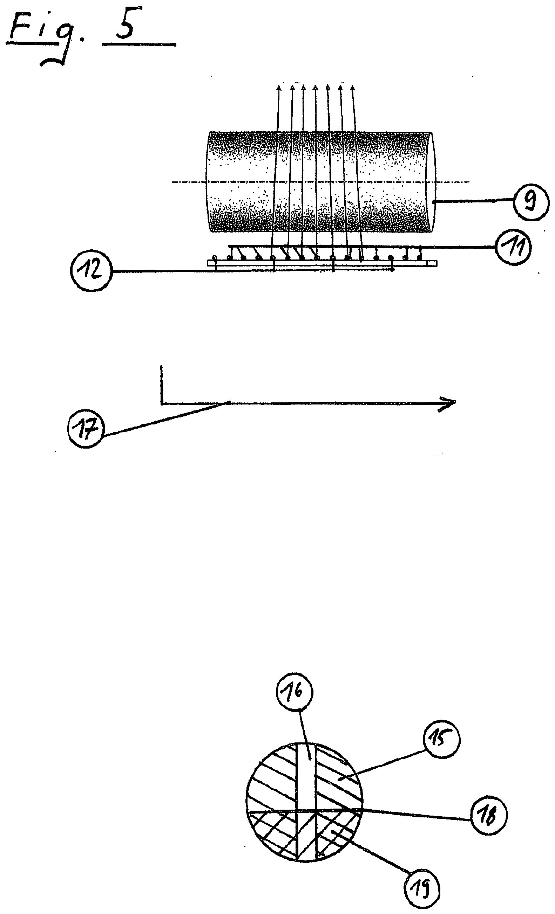

Die Fig.5 zeigt die Verwendung einer trichroitischen Blende.
Die Darstellung der Verhältnisse in der Fig.5 entspricht in vielen Teilen der Darstellung der Fig.4. Die Fig.5 zeigt wieder eine Beleuchtung des zu untersuchenden Glasbandes mittels LEDs von unterschiedlicher Wellenlänge.
Bei der trichroitischen Blende in Fig. 5 geht es darum das Bildfeld und die Intensität für die unterschiedlichen Wellenlängen zu kontrollieren:
Für die Farbe rot in Reflexion ist die Intensität am geringsten (Glas hat nur 4% Reflexionsgrad pro Oberfläche, d.h. insgesamt nur 8%). Deshalb wird für die Farbe rot die gesamte Blendenöffnung benötigt.

Im Transmissionsgrad von Glas bedeutet: 100% -8% = 92%. Deshalb kann der Lichtstrom mit einer kleineren Blendenöffnung (Blendenfläche) reduziert werden.

Für die Messung der Verzerrung mit den blauen LEDs genügt eine sehr kleine Öffnung, weil es nur darum geht die Lichtpunkte der LEDs auf der CCD-Zeile zu sehen. Dies wird durch die Schlitzblende realisiert. Die Ausformung als Schlitz hat den Vorteil, dass die Strahlablenkung in y-Richtung keinen Einfluss hat. Der Schlitz dient nicht der Einengung des Gesichtsfeldes.

Für die grüne Wellenlänge soll außer dem Lichtstrom auch das Gesichtsfeld eingeschränkt werden, so dass sich eine Strahlablenkung in y-Richtung zusätzlich auf die Intensität auswirkt.

Die grünen LEDs dienen im vorliegenden Beispiel vorzugsweise der Messung der Strahlablenkung in der Richtung des laufenden Glasbands (Y-Richtung). Aufgrund der vollflächigen Messung und der Stetigkeit der Glasoberfläche kann aus der Detektion der Variation in Y - Richtung auch die Variation in X - Richtung berechnet werden.

Die Kombination der aufgezeigten LED - Beleuchtung mit einer trichroitischen Blende ermöglicht eine ganzflächige Messung der Dicke, sowie Dicken - und Brechkraft - Variation.

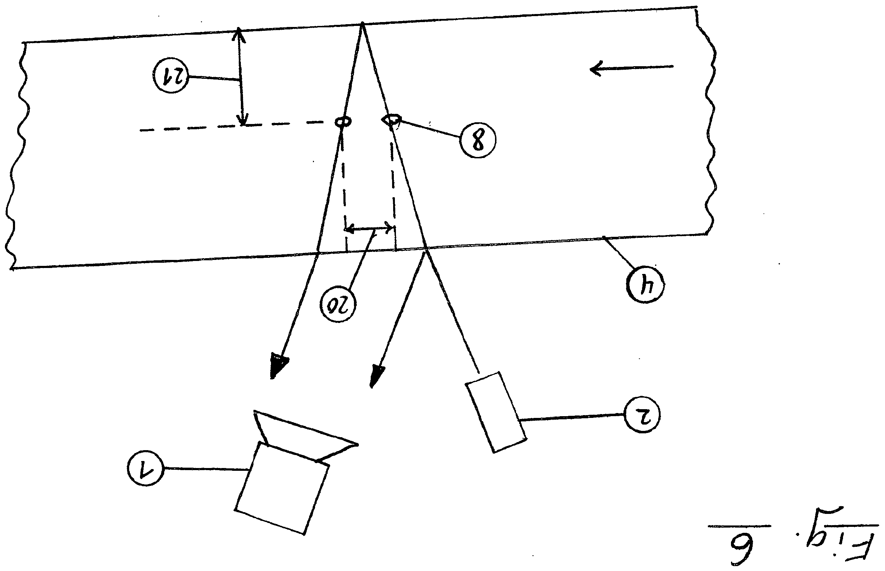

Die Fig.6 zeigt eine Signal - Auswertung bezüglich der Lage von Blasen im Glasband.

In der Fig.6 ist ein Glasband 4 mit einer, im Laufe des Produktionsprozesses sich fortbewegenden Einschlusses (zum Beispiel einer Luftblase) 8 gezeigt, wobei diese Bewegung mittels einer CCD -Kamera 1 verfolgt wird.

Neben Verzerrungen zählen Einschlüsse zu den wichtigsten Fehlerarten, die in der Glasproduktion klassifiziert werden müssen. Viele Einschlüsse verursachen Verzerrungen und können dadurch als relevante Fehler charakterisiert werden. Insbesondere kleine Einschlüsse in dicken Gläsern verursachen jedoch keine Verzerrung. Deshalb müssen andere Methoden zu deren Klassifizierung angewandt werden.

Zur Detektion wird hierbei das Glasband 4 von einer Lichtquelle 2 mit roter Lichtemission unter einem Winkel von etwa 15 Grad zur Senkrechten beleuchtet. Der von der Lichtquelle 2 ausgesandte Lichtstrahl wird hierbei einmal an der Oberfläche des Glasbands 4 reflektiert und gebrochen, durch das Glasband weiter geleitet, an der Unterfläche des Glasbands 4 reflektiert und dann vor dem Austritt aus dem Glasband 4 erneut gebrochen und kann dann gemessen werden. Ein Einschluss (z.B. Luftblase) unterbricht den Lichtstrahl auf dem Hinweg und auf dem Rückweg nach der Reflexion. In der CCD-Zeile erscheint der Einschluss deshalb doppelt mit einem Schatten bzw. Echo während sich das Glasband weiterbewegt. Aus der Messung des zeitlichen Abstandes des Fehlerbildes und seines Echos lassen sich dann zusammen mit der Bandgeschwindigkeit die sog. Echo - Distanz und die jeweilige Höhenlage dieses Einschlusses (Luftblase) 8 berechnen.

Es erfolgt während des Vorbeilaufs des Glasbands (4) eine zweistufige parallele Signalauswertung, wobei Bitmaps aus allen Kanälen parallel verarbeitet werden und weitere Daten von der Fertigungslinie mit einbezogen werden und eine besondere Genauigkeit der Ermittlung von Fehlstellen mittels eines besonderen mathematischen Algorithmus erreicht wird.

### Bezugszeichenliste

- 1: CCD - Kamera
- 2: Lichtquelle (rot)
- 3: oberer Lichtquellen - Schutz
- 4: Glasband oder Glas - Scheibe
- 5: LED - Unterflur - Lichtquelle
- 6: unterer Lichtquellen - Schutz
- 7: verzerrter Bereich
- 8: Einschluss oder Luftblase
- 9: Zylinder - Linse
- 10: Peak
- 11: grüne LEDs
- 12: blaue LEDs
- 13: CCD - Kamera - Zeile
- 14: Abbildung der Zylinder - Linse
- 15: Dichroitisches Filter (stoppt Blau)
- 16: Schlitzblende
- 17: Video - Signal grün (gleichmäßige Intensität)
- 18: Messer - Blende
- 19: Trichroitisches Filter
- 20: Echo - Distanz
- 21: Höhen - Lage eines Einschlusses im Glasband

## Patentansprüche

1. Vorrichtung zur schnellen und sicheren Messung von Verzerrungsfehlern in einem produzierten Floatglas-Band mit einer zeilenförmigen, die Breite des zu untersuchenden Glasbands (4) von unten durchleuchtenden, LED-Unterflur-Lichtquelle (5) mit dicht nebeneinander angeordneten, LEDs, wobei die LED-Unterflur-Lichtquelle (5) im spitzen Winkel zu der Untersuchungsebene geneigt ist, wobei LEDs (11) mit einer Wellenlänge, die der Farbe Grün entspricht und LEDs (12) mit einer Wellenlänge, die der Farbe Blau entspricht, verwendet werden,
einer oberhalb des Glasbandes (4) angeordneten Lichtquelle (2), wobei diese in einem spitzen Winkel, gemessen von der Vertikalen zur Untersuchungsebene, zur selben Seite wie die LED-Unterflur-Lichtquelle (5) geneigt ist,
einer, über dem Glasband angeordneten Anordnung von mindestens in einer Reihe angeordneten vier CCD-Kameras,
wobei die Objektive dieser Kameras wahlweise mit einer Schlitzblende (16), einer Messer-Blende (18) und/oder einem dichroitischen und/oder einem trichroitischen Filter ausgestattet sein können,
einer linienförmig, parallel zu der gesamten Länge der LED-Unterflur-Lichtquelle (5) angeordneten, Zylinder-Linse (8),
deren Abstand zu der LED-Unterflur-Lichtquelle (5) stufenlos einstellbar ist, wobei diese unter dem Glasband (4) in der Ebene des Strahlengangs zwischen der LED-Unterflur-Lichtquelle (5) und der Kameraanordnung angeordnet ist, wobei durch die stufenlose Einstellung der Zylinder-Linse eine punktförmige Abbildung einer LED in der Messebene einer Kamera erfolgt, und wobei die LED-Unterflur-Lichtquelle (5) und die CCD-Kameras (1) sich bezüglich dem zu untersuchenden Glasband (4) gegenüber liegen und in ihrer optischen Verbindungsachse so zueinander geneigt sind, dass sie mittels eines flächenmäßig vorgelagerten unteren Lichtquellen-Schutzes (6) und mittels eines flächenmäßig vorgelagerten oberen Lichtquellen-Schutzes (3) vor Beschädigung geschützt werden.

2. Verfahren zur schnellen und sicheren Messung von Verzerrungsfehlern in einem produzierten Floatglas-Band mit den folgenden Merkmalen:
a) das zu untersuchende Glasband (4) wird mittels einer zeilenförmigen, die Breite des zu untersuchenden Glasbands (4) von unten durchleuchtenden, LED-Unterflur-Lichtquelle (5) mit dicht nebeneinander angeordneten, LEDs, wobei mindestens 2 Arten von LEDs mit unterschiedlicher Wellenlänge in beliebiger Folge verwendet werden, und die LED-Unterflur-Lichtquelle (5) im spitzen Winkel zu der Untersuchungsebene geneigt ist, bestrahlt,
b) mittels der Einrichtung einer linienförmig, parallel zu der gesamten Länge der LED-Unterflur-Lichtquelle (5) angeordneten, Zylinder-Linse (8), deren Abstand zu der LED-Unterflur-Lichtquelle (5) stufenlos einstellbar ist, wobei diese unter dem Glasband (4) in der Ebene des Strahlengangs zwischen der LED-Unterflur-Lichtquelle (5) und einer Anordnung von mindestens 4 CCD-Kameras (1) über dem Glasband (4) angeordnet ist, wird der Strahlengang so fokussiert, dass eine punktförmige Abbildung einer LED in der Messebene einer, über dem Glasband (4) angeordneten, CCD-Kamera (1) erfolgt, und
c) es erfolgt während des Vorbeilaufs des Glasbands (4) eine zweistufige parallele Signalauswertung, wobei Bitmaps aus allen Kanälen parallel verarbeitet werden und weitere Daten von der Fertigungslinie mit einbezogen werden, und wobei mittels eines mathematischen Algorithmus Fehlstellen ermittelt werden.

3. Verfahren nach Anspruch 2,
**dadurch gekennzeichnet,**
**dass** LEDs (11) mit einer Wellenlänge, die der Farbe Grün entspricht und LEDs (12) mit einer Wellenlänge, die der Farbe Blau entspricht, verwendet werden.

4. Verfahren nach Anspruch 2 oder 3,
**dadurch gekennzeichnet,**
**dass** die LED-Unterflur-Lichtquelle (5) und die CCD-Kameras (1) sich bezüglich des zu untersuchenden Glasbands (4) gegenüber liegen und in ihrer optischen Verbindungsachse so zueinander geneigt sind, dass sie mittels eines flächenmäßig vorgelagerten unteren Lichtquellen-Schutzes (6) und mittels eines flächenmäßig vorgelagerten oberen Lichtquellen-Schutzes (3) vor Beschädigung sicher geschützt werden.

## Claims

1. Device for rapidly and reliably measuring distortion defects in a manufactured float glass strip, comprising a linear inset LED light source (5) transilluminating from below the width of the glass strip (4) to be examined, said light source having LEDs arranged closely alongside one another, wherein the inset LED light source (5) is inclined at an acute angle with respect to the examination plane, wherein LEDs (11) having a wavelength corresponding to the colour green and LEDs (12) having a wavelength corresponding to the colour blue are used, a light source (2) arranged above the glass strip (4), wherein said light source is inclined at an acute angle, measured from the vertical with respect to the examination plane, with respect to the same side as the inset LED light source (5), an arrangement - arranged above the glass strip - of at least four CCD cameras arranged in a series, wherein the lenses of said cameras can optionally be equipped with a slit diaphragm (16), a blade diaphragm (18) and/or a dichroic and/or a trichroic filter, a cylindrical lens element (8) arranged linearly and parallel to the entire length of the inset LED light source (5), the distance between said cylindrical lens element and the inset LED light source (5) being adjustable in a continuously variable manner, wherein said cylindrical lens element is arranged below the glass strip (4) in the plane of the beam path between the inset LED light source (5) and the camera arrangement, wherein a point imaging of an LED in the measurement plane of a camera is carried out by way of the continuously variable adjustment of the cylindrical lens element, and wherein the inset LED light source (5) and the CCD cameras (1) lie opposite one another relative to the glass strip (4) to be examined and are inclined with respect to one another in their optical connecting axis such that they are protected against damage by means of a lower light source protection (6) mounted areally in front and by means of an upper light source protection (3) mounted areally in front.

2. Method for rapidly and reliably measuring distortion defects in a manufactured float glass strip, comprising the following features:
a) the glass strip (4) to be examined is irradiated by means of a linear inset LED light source (5) transilluminating from below the width of the glass strip (4) to be examined, said light source having LEDs arranged closely alongside one another, wherein at least two types of LEDs having different wavelengths in an arbitrary sequence are used, and the inset LED light source (5) is inclined at an acute angle with respect to the examination plane,
b) by means of the set-up of a cylindrical lens element (8) arranged linearly and parallel to the entire length of the inset LED light source (5), the distance between said cylindrical lens element and the inset LED light source (5) being adjustable in a continuously variable manner, wherein said cylindrical lens element is arranged below the glass strip (4) in the plane of the beam path between the inset LED light source (5) and an arrangement of at least four CCD cameras (1) above the glass strip (4), the beam path is focused such that a point imaging of an LED in the measurement plane of a CCD camera (1) arranged above the glass strip (4) is carried out, and
c) a two-stage parallel signal evaluation is carried out during the progression past the glass strip (4), wherein bitmaps from all channels are processed in parallel and further data from the production line are concomitantly included and wherein defects are determined by means of a mathematical algorithm.

3. Method according to Claim 2,
**characterized**
**in that** LEDs (11) having a wavelength corresponding to the colour green and LEDs (12) having a wavelength corresponding to the colour blue are used.

4. Method according to Claim 2 or 3,
**characterized**
**in that** the inset LED light source (5) and the CCD cameras (1) lie opposite one another relative to the glass strip (4) to be examined and are inclined with respect to one another in their optical connecting axis such that they are reliably protected against damage by means of a lower light source protection (6) mounted areally in front and by means of an upper light source protection (3) mounted areally in front.

## Revendications

1. Dispositif permettant une mesure rapide et sûre d'erreurs de distorsion dans une bande de verre flotté produite, comprenant
une source de lumière encastrée au sol à DEL (5) linéaire, qui éclaire par le bas la largeur de la bande de verre (4) à analyser, qui comporte des DEL disposées à proximité immédiate les unes des autres, la source de lumière encastrée au sol à DEL (5) étant inclinée d'un angle aigu par rapport au plan d'analyse, des LED (11) ayant une longueur d'onde correspondant à la couleur verte et des LED (12) ayant une longueur d'onde correspondant à la couleur bleue étant utilisées,
une source de lumière (2) disposée au-dessus de la bande de verre (4), celle-ci étant inclinée d'un angle aigu, mesuré entre la verticale et le plan d'analyse, du même côté que la source de lumière encastrée au sol à LED (5), un agencement d'au moins quatre caméras CCD agencées en ligne et disposées au-dessus de la bande de verre,
dans lequel les objectifs de ces caméras peuvent être équipés au choix d'un diaphragme à fente (16), d'un diaphragme à lame (18) et/ou d'un filtre dichroïque et/ou trichroïque,
une lentille cylindrique (8) linéaire disposée parallèlement à toute la longueur de la source de lumière encastrée au sol à LED (5), dont la distance à la source de lumière encastrée au sol à LED (5) est réglable en continu, celle-ci étant disposée sous la bande de verre (4) dans le plan du chemin de faisceau entre la source de lumière encastrée au sol à LED (5) et l'agencement de caméras, une formation d'image ponctuelle d'une LED dans le plan de mesure d'une caméra étant effectuée par le réglage en continu de la lentille cylindrique, et
dans lequel la source de lumière encastrée au sol à DEL (5) et les caméras CCD (1) sont situées en face les unes des autres par rapport à la bande de verre (4) à analyser et leurs axes de liaison optique sont inclinés les uns par rapport aux autres de manière à ce qu'elles soient protégées contre les dommages au moyen d'une protection de sources de lumière inférieure (6) située à l'avant de celle-ci en surface et au moyen d'une protection de sources de lumière supérieure (3) située à l'avant en surface.

2. Procédé permettant une mesure rapide et sûre d'erreurs de distorsion dans une bande de verre flotté produite, présentant les caractéristiques suivantes :
a) la bande de verre (4) à analyser est exposée au moyen d'une source de lumière encastrée au sol à LED (5) linéaire qui éclaire par le bas la largeur de la bande de verre (4) à analyser et dont les LED sont disposées à proximité immédiate les unes des autres et, au moins 2 types de LED ayant des longueurs d'onde différentes étant utilisés dans une séquence quelconque, et la source de lumière encastrée au sol à LED (5) étant inclinée d'un angle aigu par rapport au plan d'analyse,
b) au moyen du dispositif constitué d'une lentille cylindrique linéaire (8) disposée parallèlement à toute la longueur de la source de lumière encastrée au sol à LED (5), dont la distance par rapport à la source de lumière encastrée au sol à LED (5) est réglable en continu, celle-ci étant disposée sous la bande de verre (4) dans le plan du chemin de faisceau entre la source de lumière encastrée au sol à LED (5) et un agencement d'au moins 4 caméras CCD (1) au-dessus de la bande de verre (4), le chemin de faisceau est focalisé de manière à effectuer une formation d'image ponctuelle d'une LED dans le plan de mesure d'une caméra CCD (1) disposée au-dessus de la bande de verre (4), et
c) il est procédé à une évaluation en parallèle du signal en deux stades pendant le passage de la bande de verre (4),
des images binaires de tous les canaux étant traitées en parallèle et d'autres données de la chaîne de production étant prises en compte, et un algorithme mathématique étant utilisé pour déterminer des défauts.

3. Procédé selon la revendication 2, **caractérisé en ce que** des DEL (11) ayant une longueur d'onde correspondant à la couleur verte et des DEL (12) ayant une longueur d'onde correspondant à la couleur bleue sont utilisées.

4. Procédé selon la revendication 2 ou 3, **caractérisé en ce que** la source de lumière encastrée au sol à LED (5) et les caméras CCD (1) sont situées en face les unes des autres par rapport à la bande de verre (4) à analyser et **en ce que** leurs axes de liaison optique sont inclinés les uns par rapport aux autres de manière à ce qu'elles soient protégées de manière sûre contre les dommages au moyen d'une protection de sources de lumière inférieure (6) située à l'avant de celles-ci en surface et au moyen d'une protection de sources de lumière supérieure (3) située à l'avant de celles-ci en surface.
